# FASCICULE DE BREVET EUROPEEN

(11) **EP 2 971 760 B1**
(45) Date de publication et mention de la délivrance du brevet: **11.10.2017**
(21) Numéro de dépôt: 14708298.6
(22) Date de dépôt: 07.03.2014
(51) Int. Cl.: F28D 20/00, F28D 20/02, F03G 6/00

(54) **CENTRALE SOLAIRE À CONCENTRATION À FONCTIONNEMENT AMÉLIORÉ**
KONZENTRIERENDE SONNENENERGIESTATION MIT VERBESSERTEM BETRIEB
CONCENTRATING SOLAR POWER STATION WITH IMPROVED OPERATION

(30) Priorité: 11.03.2013 FR 1352150
(43) Date de publication de la demande: 20.01.2016
(73) Titulaire: Commissariat à l'Énergie Atomique et aux Énergies Alternatives, 75015 Paris (FR)
(72) Inventeur: BRUCH, Arnaud, F-69560 Sainte Colombe Les Vienne (FR); COUTURIER, Raphaël, F-38360 Sassenage (FR); FOURMIGUE, Jean-François, F-38600 Fontaine (FR)
(74) Mandataire: Brevalex
(86) Numéro de dépôt international: PCT/EP2014/054456
(87) Numéro de publication internationale: WO 2014/139888

(56) Documents cités:
- EP-A1- 2 096 305
- EP-A1- 2 400 120
- CN-A- 101 798 996

## Description

### DOMAINE TECHNIQUE ET ART ANTÉRIEUR

La présente invention se rapporte à une centrale solaire à fonctionnement amélioré, plus particulièrement à une centrale solaire à concentration.

La technologie solaire thermique à concentration (CSP pour "Concentrated Solar Power" en terminologie anglo-saxonne) consiste à utiliser le rayonnement solaire pour chauffer un fluide dans un champ solaire, le fluide servant directement ou indirectement de source chaude dans un cycle thermodynamique. La concentration permet d'atteindre des températures plus ou moins élevées et ainsi de bénéficier de rendements de conversion thermodynamiques plus ou moins importants.

Le fonctionnement optimisé de ce type de système de conversion est lié principalement à deux critères :
- le maintien d'une température de fluide constante en entrée du système de conversion (correspondant également à la sortie du « champ solaire »). Le rendement de ce type de système est en effet maximal pour une température de fonctionnement optimale et décroit lorsque cette température diminue ;
- la réduction des fluctuations de température autour d'une valeur moyenne, ce qui permet de moins solliciter le système de conversion, de diminuer la fatigue thermique de tous les organes, de diminuer les risques de surchauffe du fluide caloporteur ou du traitement sélectif et donc d'augmenter durée de vie.

Dans une centrale solaire, le non-respect de ces critères peut être dû à un certain nombre d'éléments, notamment le passage de nuage sur le champ solaire, des erreurs de suivi (ou tracking) des miroirs, des fluctuations dues aux régulations du contrôle-commande, etc.

Sur une centrale solaire CSP, le système de conversion peut être alimenté en chaleur par le champ solaire, par le réservoir de stockage thermique si celui-ci existe, voire par les deux en même temps.

Il est alors recherché de maintenir la température d'entrée la plus constante possible et de limiter les fluctuations de température d'entrée autour d'une valeur moyenne dans tous les modes de fonctionnement d'une centrale solaire CSP, c'est-à-dire :
- lorsque le système de conversion est alimenté uniquement par les champs solaires ;
- lorsque le système de conversion est alimenté uniquement par le réservoir de stockage thermique ;
- lorsque le système de conversion est alimenté par les champs solaires et le réservoir de stockage.
- lorsque les champs solaires sont connectés uniquement au réservoir de stockage. Dans ce mode de fonctionnement, le système de conversion n'est pas en fonctionnement et le maintien d'une température d'entrée la plus constante possible et la limitation des fluctuations permet un fonctionnement optimisé du réservoir de stockage thermique.

Le stockage de la chaleur peut être typiquement réalisé soit sous forme d'énergie sensible en faisant varier le niveau de température d'un matériau de stockage solide ou liquide, sous forme d'énergie latente en faisant changer de phase un matériau de stockage ou enfin sous forme d'énergie chimique en utilisant des réactions chimiques endothermiques et exothermiques.

Dans le cas d'un stockage de chaleur par chaleur sensible, la chaleur est stockée par élévation de la température d'un matériau de stockage qui peut être liquide, solide ou une combinaison des deux.

Les procédés industriels impliquant une utilisation ou une conversion de l'énergie thermique au moyen d'un cycle thermodynamique, par exemple par l'utilisation d'une turbine à vapeur, font globalement intervenir deux niveaux de température qui sont les conditions aux bornes du cycle. Le maintien de ces deux niveaux de température le plus constants possibles est recherché afin d'obtenir un fonctionnement optimisé du cycle. En effet, à titre d'exemple, les turbines à vapeur qui assurent la conversion de l'énergie thermique en énergie électrique ont un rendement plus élevé lorsque la température d'entrée dans la turbine est maintenue constante à une valeur prédéfinie.

Par conséquent, le stockage associé à de tels systèmes doit donc respecter ces caractéristiques et permettre par exemple de déstocker de la chaleur à un niveau de température constant.

Un exemple de ce type de fonctionnement est le domaine du solaire thermique à concentration où un système de stockage comporte un réservoir contenant à la fois le fluide chaud et le fluide froid. Il existe alors une stratification thermique au sein du réservoir, le fluide chaud situé en partie supérieure et le fluide froid situé en partie inférieure sont alors séparés par une région de transition appelée « thermocline ».

L'utilisation d'un réservoir unique permet de réduire le nombre de composants, telles que les pompes, vannes etc. et de simplifier le contrôle commande.

Dans un stockage de type thermocline, le matériau de stockage peut être un liquide caloporteur ou, avantageusement, un mélange d'un fluide caloporteur et d'un matériau solide bon marché. L'utilisation d'un tel matériau solide permet de plus d'améliorer la ségrégation du fluide chaud et du fluide froid en diminuant les effets de remélange. Dans ce dernier cas, on parle alors de «thermocline dual» (ou « mixed-media thermocline » en terminologie anglaise).

Ce réservoir "thermocline dual" présente l'avantage de réduire la quantité de liquide nécessaire; sachant que les matériaux solides type roches ont un coût inférieur à celui du fluide caloporteur liquide, le coût total est réduit.

Dans un réservoir thermocline, afin de tenir compte des différences de masse volumique et éviter des mouvements de convection naturelle, le fluide caloporteur est introduit par le haut du réservoir lors des phases de stockage et par le bas du réservoir lors des phases de déstockage. Le réservoir thermocline est donc caractérisé par une zone chaude en haut de la cuve, une zone froide en bas et une zone de transition entre les deux zones appelée thermocline. Le principe de ce type de stockage de chaleur est de créer un « piston thermique », c'est-à-dire l'avancée d'un front thermique le plus mince possible et uniforme transversalement. Ceci permet de maintenir des températures constantes lors des phases de charge et de décharge.

Lors des phases de charge, le liquide froid est retiré du réservoir par le bas et est échauffé, par exemple en traversant un échangeur thermique d'un collecteur solaire, et ensuite renvoyé dans le réservoir par le haut. Lors d'une phase de décharge, le liquide chaud est retiré du réservoir par le haut, et est envoyé par exemple vers l'évaporateur d'un cycle thermodynamique intégrant une turbine, dans lequel il est refroidi et est ensuite renvoyé dans le réservoir par le bas. Lors des phases de charge et de décharge, le piston thermique se déplace vers le bas et vers le haut respectivement.

Le stockage de type "thermocline dual" basé sur un mélange de fluide caloporteur liquide et de matrice solide met en jeu des vitesses de fluides très faibles de l'ordre de quelques mm/s afin d'assurer le transfert de chaleur entre le fluide et la charge statique et de limiter les inhomogénéités transversales de vitesse et de température.

La zone de thermocline est le lieu d'un gradient de température entre la température de la zone chaude et celle de la zone froide. Or tout cette zone correspondant au gradient thermique n'est pas efficace pour le processus de stockage d'un point de vue énergétique.

En effet,
- la densité d'énergie stockée y est plus faible en raison d'une élévation de température plus réduite du matériau de stockage,
- la température de restitution de l'énergie va être plus faible que celle de stockage. La chaleur déstockée sera donc moins valorisable.

Il est donc souhaitable de réduire le volume de cette zone, une telle réduction permettrait :
- de diminuer le volume du réservoir de stockage lorsque l'on considère une quantité d'énergie à stocker/déstocker donnée. Dans le cas d'un réservoir de stockage cylindrique avec axe vertical, cela permet de diminuer sa hauteur ou son diamètre ;
- d'augmenter la quantité d'énergie stockée/déstockée lorsque l'on considère un volume de stockage donné ;
- d'assurer un fonctionnement optimal du système de conversion électrique sur une durée plus importante.
Le document CN101798996 décrit une centrale solaire comportant un champ solaire apte à délivrer un fluide chaud, un système de conversion de chaleur un système de stockage thermique, ledit système de conversion de chaleur et ledit système de stockage thermique étant connectés en sortie du champ solaire de sorte à être alimentés en fluide chaud et ledit champ solaire étant connecté en sortie du système de conversion de chaleur et du système de stockage thermique de sorte que le champ solaire soit alimenté en fluide froid par le système de conversion de chaleur et/ou le système de stockage thermique.

Le document ZL 200720051634.5 propose d'intégrer en haut et en bas du lit de roches deux échangeurs tube/calandre contenant dans la calandre un matériau à changement de phase dont les températures de fusion sont respectivement adaptées aux températures haute et basse du stockage thermocline.

Ce système assure deux fonctions complémentaires. Il permet de limiter le volume de la zone de thermocline en fin de charge ou de décharge du réservoir. Ainsi le taux d'utilisation, c'est à dire le rapport entre la quantité de chaleur réellement stockée dans le réservoir et la quantité maximale théorique stockable dans le réservoir (calculée comme la quantité de chaleur lorsque l'intégralité du réservoir de stockage est remplie à la température chaude), est largement augmenté. La taille du réservoir peut alors être diminuée si l'on travaille à même quantité d'énergie stockée ou la quantité d'énergie effectivement stockée augmentée si l'on travaille à même taille de réservoir. Il permet également de stabiliser les températures de sortie du réservoir en augmentant la durée pendant laquelle ces températures sont constantes :
- pour la température de sortie en décharge, cela permet d'utiliser l'énergie restituée de façon optimale comme évoquée précédemment lorsque ce déstockage alimente un système de conversion électrique ;
- pour la température de sortie en charge cela permet de ne pas perdre d'énergie en stockant l'énergie contenue dans le gradient de température dans le matériau à changement de phase et de stabiliser le cycle thermodynamique de la centrale et/ou le champ solaire.

La solution proposée par ce document permet donc de répondre à la problématique posée précédemment lorsqu'uniquement le réservoir de stockage alimente le système de conversion électrique. Toutefois, ceci n'est plus vrai lorsque le système est alimenté par les champs solaires ou par l'ensemble champs solaires/stockage.

En outre, ce système présente les inconvénients suivants :
- L'intégration du matériau à changement de phase dans le réservoir ne permet d'améliorer le fonctionnement que du réservoir de stockage et non de la centrale solaire à concentration dans sa globalité. Ainsi, lorsque le champ solaire est directement connecté à une turbine de production électrique, les galettes de matériau à changement de phase du réservoir n'assurent plus le lissage des fluctuations de température ni le maintien constant de la température.
- Le bon fonctionnement d'un stockage de chaleur de type thermocline est très sensible à la distribution du fluide dans le réservoir afin de garantir le meilleur piston thermique possible. Dans le document ZL 200720051634.5, le matériau à changement de phase est contenu dans un échangeur de type tube/calandre qui sert également de distributeur pour le lit en de roches en aval. En raison des courts-circuits fluidiques existant entre la paroi externe de l'échangeur tube/calandre et la paroi interne du réservoir, ceux-ci étant nécessaire afin de permettre une dilatation différentielle de la paroi du réservoir et du tube/calandre, il existe un fort risque de mauvaise distribution en entrée de lit de roches avec ce dispositif.
- Enfin ce système n'est optimisé que pour un seul fonctionnement, les deux matériaux à changement de phase fixant la température haute et la température basse.

### EXPOSÉ DE L'INVENTION

C'est par conséquent un but de la présente invention d'offrir une centrale solaire dont le fonctionnement global est amélioré.

Le but précédemment énoncé est atteint par une centrale solaire comportant au moins un champ solaire, un système de conversion en énergie électrique et un système de stockage, et au moins un premier échangeur thermique comportant un matériau à changement de phase situé en amont de l'alimentation en fluide chaud du système de conversion et du système de stockage thermique et entre la sortie du champ solaire et le système de stockage. Le matériau à changement de phase a pour effet de lisser les variations de température du fluide le traversant dans les différentes phases en fonctionnement :
- En phase de stockage uniquement (mode de fonctionnement dit A), le matériau à changement de phase assure un lissage des fluctuations de température du fluide sortant du champ solaire CS et alimentant le système de stockage ;
- En phase de déstockage uniquement (mode de fonctionnement dit B) le matériau à changement de phase assure un lissage des fluctuations de température du fluide sortant du système de stockage vers le système de conversion d'énergie ;
- En phase d'alimentation directe du système de conversion d'énergie par le champ solaire uniquement (mode de fonctionnement dit C), le matériau à changement de phase lisse la température du fluide alimentant le système de conversion d'énergie ;
- Lorsque le système de conversion est alimenté à la fois par le système de stockage et le champ solaire (mode de fonctionnement dit D), le matériau à changement de phase assure encore un lissage de la température du fluide alimentant le système de conversion.
- En phase de stockage et d'alimentation de la turbine (mode de fonctionnement dit E), le matériau à changement de phase assure un lissage des fluctuations de température du fluide sortant du champ solaire et donc de la température du fluide alimentant à la fois le système de stockage et le système de conversion d'énergie.

En d'autres termes, dans le cas d'un système de production d'énergie électrique à partir de la chaleur produite par un champ solaire et mettant en oeuvre un thermocline, un matériau à changement de phase est disposé dans l'installation de sorte que le fluide circulant entre le champ solaire, le thermocline et le système de conversion, par exemple une turbine, circule à travers le matériau à changement de phase et échange de la chaleur avec celui-ci assurant alors un lissage de la température de ce fluide.

L'invention permet d'accroitre la stabilité de ces niveaux de température et donc de stabiliser le fonctionnement global de la centrale solaire, ce qui permet d'augmenter son rendement global et sa durée de vie.

Le fonctionnement du système de conversion peut alors être optimisé puisque la température du fluide en entrée est maintenue sensiblement constante. Le stockage est optimisé puisque la température en entrée du réservoir de type thermocline est également sensiblement constante.

Le matériau à changement de phase est avantageusement d'accès facile pour être remplacé en cas de maintenance ou pour adapter l'installation à des conditions de fonctionnement en température différentes, par exemple pour passer d'un mode de fonctionnement hivernal à un mode de fonctionnement estival ou inversement.

De manière très avantageuse, un deuxième échangeur contenant du matériau à changement de phase est disposé en aval du système de conversion, en amont du champ solaire et entre le système de stockage et l'entrée du champ solaire. Il assure alors également :
- un lissage de la température du fluide froid entrant dans le système de stockage lors des phases de déstockage (modes de fonctionnement B et D)
- un lissage de la température d'entrée du fluide froid dans le champ solaire. Le champ solaire subit alors moins de contraintes thermiques. Sa durée de vie est augmentée. De plus, une température d'entrée plus constante dans le champ solaire induit une sollicitation moins importante du contrôle commande et donc une température de sortie du champ solaire plus constante.

Les échangeurs à matériau à changement de phase placés en amont et en aval des champs solaires contribuent à maintenir constantes les températures haute et basse du système en atténuant les fluctuations. Ces fluctuations peuvent provenir du passage de nuage, des régulations, d'un fonctionnement transitoire du système de conversion électrique etc.

Dans un exemple de réalisation, l'installation de production d'électricité comporte deux turbines, présentant des températures nominales de fonctionnement différentes. Par exemple, l'une est destinée à fonctionner en période hivernale et l'autre est destinée à fonctionner en période estivale, deux premiers réservoirs de matériau changement de phase sont disposés en amont du système de stockage thermique dans le sens d'alimentation de celui-ci en fluide chaud, les matériaux à changement de phase présentant des températures de changement de phase différentes et adaptées au fonctionnement hivernal et estival.

La présente invention a alors pour objet une centrale solaire comportant au moins un champ solaire apte à délivrer un fluide chaud, au moins un système de conversion de chaleur, un système de stockage thermique, ledit système de conversion de chaleur et ledit système de stockage thermique étant connectés en sortie du champ solaire de sorte à être alimentés en fluide chaud et ledit champ solaire étant connecté en sortie du système de conversion de chaleur et du système de stockage thermique de sorte que le champ solaire soit alimenté en fluide froid par le système de conversion de chaleur et/ou le système de stockage thermique, la centrale solaire comportant également au moins un premier échangeur thermique disposé en aval de la sortie du champ solaire, en amont du système de conversion de chaleur et entre la sortie du champ solaire et le système de stockage thermique de sorte que tout le fluide chaud sortant du champ solaire circule dans ledit au moins un premier échangeur thermique avant d'alimenter le système de conversion de chaleur et/ou le système de stockage thermique, le premier échangeur thermique comportant un matériau à changement de phase dont la température de changement de phase est à une température légèrement inférieure à la température nominale de fonctionnement en sortie du champ solaire.

De manière très avantageuse, le au moins un premier échangeur thermique est disposé dans le circuit de la centrale solaire de sorte à être traversé par le fluide chaud destiné à alimenter à la fois le système de conversion de chaleur et le système de stockage thermique.

Dans un exemple avantageux, la centrale comporte n systèmes de conversion de chaleur présentant des température nominale de fonctionnement différentes et n premiers échangeurs thermiques en parallèle et des moyens pour autoriser ou interdire la circulation du fluide chaud dans l'un des n premiers échangeur thermiques, les matériaux de phases des n premiers échangeurs thermiques présentant des températures de changement de phase différentes, n étant un entier supérieur ou égal à deux.

Dans un autre exemple de réalisation particulièrement avantageux, la centrale comporte au moins un deuxième échangeur thermique disposé en amont de l'entrée du champ solaire, en aval du système de conversion de chaleur et entre le système de stockage thermique et l'entrée du champ solaire et de sorte que tout le fluide froid destiné à circuler dans le champ solaire ait préalablement traversé ledit deuxième échangeur thermique, ledit deuxième échangeur thermique comportant un matériau à changement de phase dont la température de changement de phase est à une température légèrement supérieure à celle de la température nominale de fonctionnement en entrée du champ solaire.

De préférence, le au moins un deuxième échangeur thermique est disposé dans le circuit de la centrale solaire de sorte à être traversé par le fluide froid sortant à la fois du système de conversion de chaleur et du système de stockage thermique.

Dans un exemple de réalisation, la centrale peut comporter n deuxièmes échangeurs thermiques en parallèle et des moyens pour autoriser ou interdire la circulation du fluide chaud dans l'un des n deuxième échangeur thermiques, les matériaux de phases des n deuxièmes échangeurs thermiques présentant des températures de changement de phase différentes.

Dans un exemple de réalisation avantageux, la centrale comporte des moyens pour isoler fluidiquement ledit premier échangeur thermique et/ou ledit deuxième échangeur thermique.

De préférence, l'écart entre la température nominale de fonctionnement en sortie du champ solaire et la température de changement de phase du matériau à changement de phase du premier échangeur thermique est compris préférentiellement entre 1°C et 15°C.

De préférence, l'écart entre la température nominale de fonctionnement en entrée du champ solaire et la température de changement de phase du matériau à changement de phase du deuxième échangeur thermique est compris entre 1°C et 15°C.

Le rapport entre le volume de matériau à changement de phase du premier échangeur thermique et/ou entre le volume de matériau à changement de phase du deuxième échangeur thermique et le volume du système de stockage thermique est/sont préférentiellement compris entre 1% et 10% du volume du réservoir de stockage

Préférentiellement, le système de stockage de la chaleur est un réservoir thermocline, ledit réservoir thermocline comportant un orifice supérieur et un orifice inférieur, et comportant une connexion fluidique entre l'orifice supérieur et l'amont dudit premier échangeur thermique. De manière encore préférée, le réservoir thermocline est un réservoir thermocline dual.

La centrale solaire peut comporter une connexion fluidique entre l'orifice inférieur et l'aval du deuxième échangeur thermique.

Dans un exemple de réalisation, le premier et/ou le deuxième échangeur thermique comportent un matériau à changement de phase encapsulé sous forme de billes. Dans un autre exemple de réalisation, le premier et/ou le deuxième échangeur thermique comportent une calandre remplie du matériau à changement de phase et des tubes dans lesquels le fluide circule.

Le système de conversion de chaleur peut être un système de production d'électricité, par exemple une turbine. En alternative, le système de conversion de chaleur peut être par exemple une machine à absorption, une installation mettant en oeuvre procédé industriel utilisant de la chaleur...

La centrale solaire est avantageusement une centrale solaire à concentration.

### BRÈVE DESCRIPTION DES DESSINS

La présente invention sera mieux comprise à l'aide de la description qui va suivre et des dessins en annexes sur lesquels :
- la figure 1 est une représentation schématique d'un exemple de réalisation d'une centrale solaire à concentration,
- la figure 2 est une représentation graphique de la variation de température du fluide chaud en entrée du thermocline avec un échangeur à matériau à changement de phase en amont du thermocline et sans échangeur à matériau à changement de phase en fonction du temps,
- la figure 3 est une représentation graphique schématique de la variation de la température du fluide chaud en sortie du thermocline lors du déstockage dans une installation selon l'invention et dans une installation sans matériau à changement de phase en fonction du temps,

- la figure 4 est une représentation schématique d'un autre exemple avantageux d'une centrale solaire à concentration,
- la figure 5 est une représentation schématique d'un autre exemple d'une centrale solaire à concentration comportant plusieurs turbines,
- la figure 6A est une représentation graphique du profil de température typique dans un thermocline,
- la figure 6B est une représentation graphique du profil de température dans un thermocline le long de sa direction verticale en fin de décharge intégré dans une centrale solaire selon l'invention comportant un échangeur thermique à matériau à changement de phase,
- la figure 6C est une représentation graphique du profil de température dans un thermocline le long de sa direction verticale en fin de décharge intégré dans une centrale solaire de l'état de la technique.

### EXPOSÉ DÉTAILLÉ DE MODES DE RÉALISATION PARTICULIERS

Dans la description qui va suivre, on désigne par "fluide chaud" le fluide sortant du champ solaire et destiné au stockage ou à la conversion d'énergie. On entend par "fluide froid" le fluide sortant de la turbine et/ou du système de stockage et destiné à alimenter le champ solaire. Le fluide caloporteur peut être par exemple un liquide (huile thermique ou sel fondus par exemple) ou un gaz.

Dans la description qui va suivre, on considère une centrale solaire à concentration destinée à la production d'électricité comportant un ou plusieurs champs solaires, une turbine produisant de l'électricité par un cycle thermodynamique.

On désigne par T1 et T2 les températures nominales de fonctionnement en entrée et en sortie du système de conversion électrique. T1 est donc la température du fluide chaud souhaitée en entrée de la turbine et T2 est la température du fluide froid en sortie du système de conversion électrique. L'utilisation d'échangeurs à matériaux à changement de phase dans la présente invention conduit à des températures en entrée et en sortie du champ solaire légèrement différentes de T2 et T1 respectivement. La différence entre la température en sortie du champ solaire et T1 est égale à la valeur choisie pour l'écart entre T1 et la température de fusion du matériau à changement de phase situé entre la sortie du champ solaire et l'entrée du système de conversion électrique, et la différence entre T2 et l'entrée du champ solaire est égale à la valeur choisie pour l'écart entre T2 et la température de fusion du matériau à changement de phase, dans le cas où un tel matériau est prévu, situé entre la sortie du système de conversion électrique et l'entrée du champ solaire. Pour plus de simplicité, dans la suite du document, cette distinction ne sera plus faite et T1 et T2 seront utilisées comme les températures aux bornes des différents composants.

Les mêmes références seront utilisées pour désigner les mêmes éléments ou ayant la même fonction dans les différents exemples de réalisation.

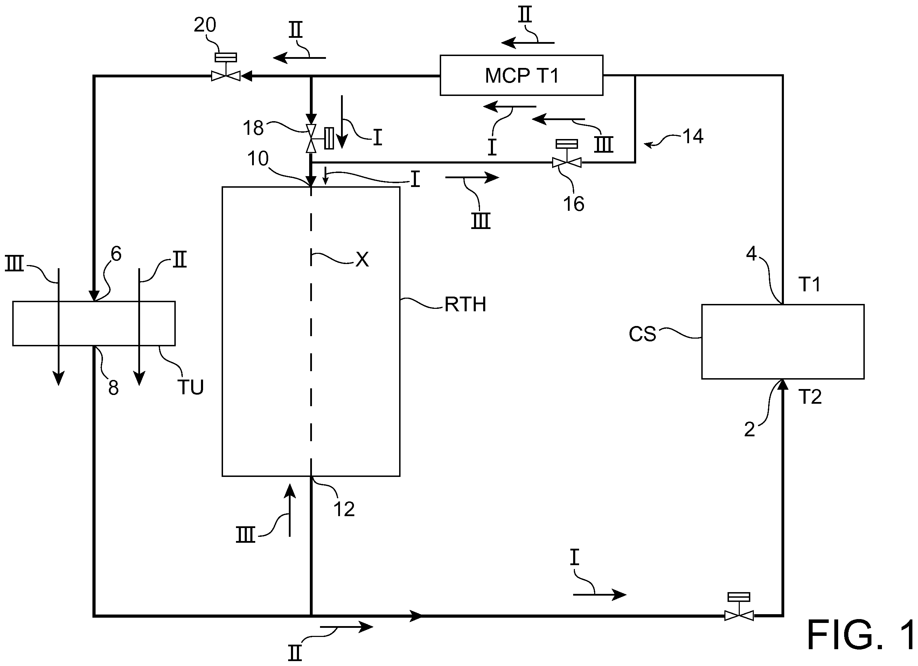

Sur la figure 1, on peut voir un exemple de réalisation d'une centrale solaire comportant un champ solaire de production de fluide chaud CS, celui-ci comprenant une entrée d'alimentation 2 en fluide froid et une sortie d'évacuation 4 en fluide chaud. L'installation comporte également une turbine TU, comportant une entrée d'alimentation 6 et une sortie d'évacuation 8. La centrale solaire comporte un système de stockage thermique, de manière avantageuse, il s'agit d'un système de stockage sous forme d'énergie sensible comprenant un réservoir de type thermocline RTH, de préférence de type thermocline dual. La centrale comporte également des moyens pour assurer la circulation du fluide. Par exemple, ces moyens de mise en circulation comportent au moins deux pompes pour assurer tous les modes de circulation qui seront décrits dans la suite de la description, par exemple une en entrée ou sortie du champ solaire et une en entrée ou sortie du système de stockage.

Le thermocline RTH comporte un réservoir avec un orifice supérieur 10 destiné à l'alimentation en fluide chaud du réservoir en phase de stockage et en évacuation du fluide chaud en phase de déstockage, et un orifice inférieur 12 destiné à l'évacuation en fluide froid en phase de stockage et à l'alimentation en fluide froid en phase de déstockage. A des fins de simplicité, ces orifices seront désignés uniquement par "orifice supérieur" et "orifice inférieur" respectivement.

Dans le cas d'un thermocline dual, le réservoir contient de préférence un matériau de stockage solide de type roche et un liquide, par exemple de l'huile, qui est celui qui circule dans l'installation.

Un tel réservoir étant bien connu de l'homme du métier, il ne sera pas décrit plus en détail.

Le système de stockage de chaleur peut être d'un autre type, par exemple, il peut comporter deux réservoirs de sels fondus, un réservoir chaud et un réservoir froid en lieu et place d'un thermocline, ou un système de stockage de chaleur par matériau à changement de phase. Il est également possible d'envisager un stockage thermochimique.

La sortie d'évacuation 4 du champ solaire CS est connectée à l'entrée d'alimentation 6 de la turbine TU et à l'orifice supérieur 10 du thermocline RTH.

La sortie 8 de la turbine TU et l'orifice inférieur 12 sont connectés à l'entrée 4 du champs solaire CS.

Dans cet exemple de réalisation, un premier échangeur MCPT1 contenant un matériau à changement de phase est disposé en aval de la sortie 2 du champ solaire et en amont de l'entrée 6 de la turbine TU et de l'orifice supérieur 10 du thermocline RTH de telle sorte que tout le fluide chaud sortant du champ solaire CS traverse le premier échangeur MCPT1 contenant le matériau à changement de phase avant d'alimenter la turbine et/ou le thermocline.

L'installation comporte également une connexion 14 directe entre l'orifice supérieur 10 du thermocline RTH et une zone amont du premier échangeur MCPT1.

Des premiers moyens de commande de l'écoulement du fluide 16, par exemple une vanne, sont prévus dans la connexion 14.

Des deuxième moyens de commande de l'écoulement du fluide 18, par exemple une vanne, sont prévus entre l'aval du premier échangeur MCPT1 et l'orifice supérieur du thermocline de sorte à autoriser ou à interrompre uniquement l'écoulement du premier échangeur MCPT1 vers le thermocline RTH en phase de charge et à forcer le passage du fluide caloporteur à travers l'échangeur MCPT1 en phase de décharge.

Des troisièmes moyens de commande de l'écoulement du fluide 20, par exemple une vanne, sont prévus entre l'échangeur MCPT1 et la turbine TU de sorte à autoriser ou à interrompre uniquement l'écoulement du premier échangeur MCPT1 vers la turbine TU.

Par exemple, l'échangeur MCPT1 comporte une enceinte contenant le matériau à changement de phase sous forme de billes encapsulées. De préférence, les billes présentent un diamètre compris entre 1 cm et 2 cm, ce qui assure un transfert de chaleur suffisamment efficace de la chaleur vers le coeur de la bille de matériau à changement de phase. Le matériau à changement de phase en passant de l'état solide à l'état liquide reste confiné dans les enveloppes de billes. En variante, on peut envisager un encapsulation de type micro-encapsulation, i.e. les billes ayant un diamètre de l'ordre de 1 mm à quelques mm. Le fluide chaud traverse l'échangeur contenant un lit de billes.

En variante, l'échangeur peut comporter une calandre remplie de matériau à changement de phase et des tubes montés dans la calandre et en contact avec le matériau à changement de phase. Le caloporteur circule alors dans les tubes.

Selon une autre variante, on peut envisager un échangeur de type échangeur à plaque dans lequel une plaque sur deux est remplie de matériau à changement de phase et une plaque sur deux sert à l'écoulement du fluide caloporteur.

On peut envisager un échangeur dont la structure interne est en nid d'abeille. Dans ce cas, une partie des cellules du nid d'abeille, typiquement une sur deux, est remplie de matériau à changement de phase tandis que l'écoulement de fluide caloporteur est réalisé dans le reste des cellules du nid d'abeille.

Il sera compris que ces exemples d'échangeur ne sont donnés qu'à titre d'illustration et ne sont pas limitatifs, toute structure d'échangeur apte à assurer un échange thermique efficace entre un matériau à changement de phase et un fluide peut convenir.

Les températures nominales de fonctionnement en sortie du champ solaire et en entrée de la turbine sont considérées comme égales, les pertes thermiques dans la tuyauteries étant modérées. La température de changement de phase du matériau à changement de phase contenu dans le premier échangeur MCPT1 est légèrement inférieure à la température nominale de fonctionnement de la turbine TU et légèrement inférieure à la température nominale de sortie du champ solaire, de sorte que le matériau à changement de phase fonde lorsque la température du fluide chaud sortant du champ solaire est supérieure à la température nominale de la turbine, le matériau à changement de phase fondu stockant ainsi de la chaleur, qu'il pourra restituer lorsque la température du fluide chaud est inférieure à la température nominale de la turbine.

On entend par "une température de changement de phase légèrement inférieure à la température nominale de fonctionnement", une température de changement de phase telle que l'écart entre la température de changement de phase et la température nominale de fonctionnement est comprise entre environ 1°C et 15 °C et de préférence entre 1°C et 5°C. Un tel écart de température est suffisamment faible pour ne pas dégrader la température de sortie du champ solaire et est suffisamment grand pour assurer un échange de chaleur efficace entre le fluide et le matériau à changement de phase.

Avantageusement, on peut prévoir des vannes aux bornes du premier échangeur MCPT1 pour permettre le retrait et le remplacement du premier échangeur MCPT1 de manière aisée.

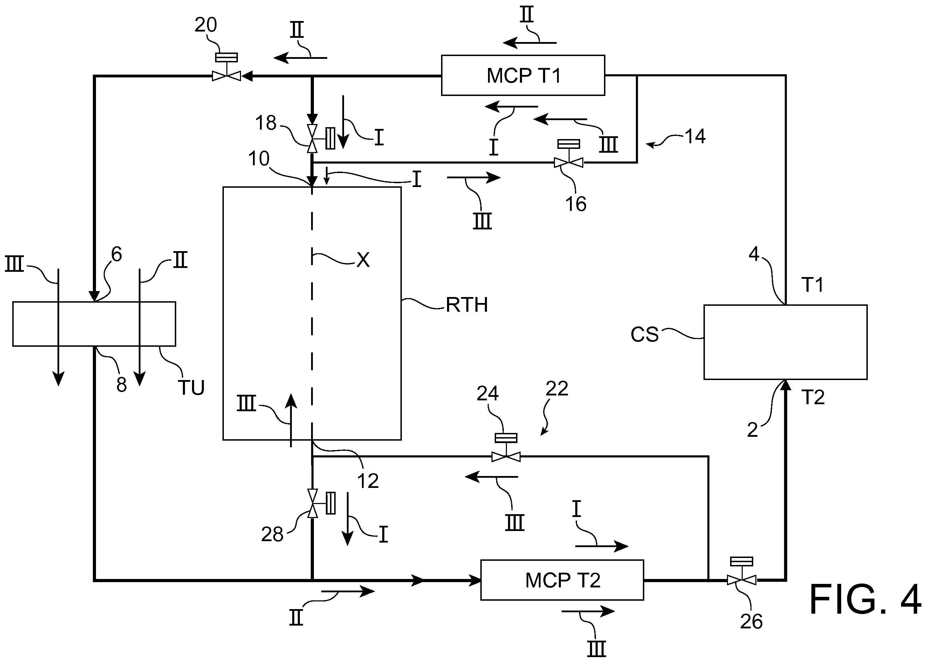

Sur la figure 4, on peut voir un autre exemple de réalisation avantageux d'une centrale solaire selon l'invention. La centrale solaire reprend la structure de la centrale solaire de la figure 1 et comporte en outre un deuxième échangeur MCPT2 contenant un matériau à changement de phase dont la température de changement de phase est différente de celle du matériau à changement de phase du premier échangeur MCPT1. La température est inférieure à la température de changement de phase du matériau du premier échangeur MCPT1.

Le deuxième échangeur MCPT2 est disposé en amont de l'entrée 4 du champ solaire et en aval de la sortie 8 de la turbine TU et entre l'orifice inférieur 12 du thermocline RTH et l'entrée 4 du champ solaire de telle sorte que tout le fluide froid sortant destiné à circuler dans le champ solaire CS traverse préalablement le deuxième échangeur MCPT2.

La température de changement de phase du matériau du deuxième échangeur MCPT2 est légèrement supérieure à la température T2. Comme pour le matériau du premier échangeur MCPT1, la température de changement de phase du matériau à changement de phase du MCPT2 est supérieure d'environ 1°C à 15 °C et de préférence 1°C à 5°C à la température nominale de fonctionnement T2 du champ solaire.

Dans l'exemple représenté, l'installation comporte également une connexion 22 directe entre une zone aval du deuxième échangeur MCPT2 et l'orifice inférieur 12 du thermocline RTH.

Des moyens de commande de l'écoulement du fluide 24, par exemple une vanne, sont prévus dans la connexion 22.

Des moyens de commande de l'écoulement du fluide 26, par exemple une vanne, sont prévus entre le deuxième échangeur MCPT2 et l'orifice d'entrée du champ solaire de sorte à autoriser ou à interrompre uniquement l'écoulement vers le champ solaire CS. Le fonctionnement de la centrale solaire implique alors uniquement le thermocline RTH et la turbine TU (mode déstockage).

Des moyens de commande de l'écoulement du fluide 28, par exemple une vanne, sont prévus entre le réservoir de stockage RTH et le deuxième échangeur MCPT2 de sorte à forcer le passage du fluide caloporteur à travers l'échangeur MCPT2. En phase de charge du thermocline, la vanne 28 est alors ouverte, le fluide sortant du thermocline traverse la vanne 28 et l'échangeur MCPT2 en direction de l'entrée du champ solaire, et en phase de décharge, la vanne 28 est fermée, le fluide provenant de la turbine TU traverse l'échangeur MCPT2 avant d'entrée dans le thermocline, la vanne 26 est également fermée.

Avantageusement, on peut prévoir des vannes aux bornes du deuxième échangeur MCPT2 pour permettre son retrait et son remplacement de manière aisée.

Les vannes 16, 18, 20, 24, 26, 28 sont commandées de sorte à modifier le mode de fonctionnement de l'installation. De préférence, les vannes sont formées par des électrovannes commandées par une unité centrale.

A titre d'exemple, T1 est égale à 300°C et T2 est égale à 150°C.

Les volumes de matériau à changement de phase mis en oeuvre sont faibles par rapport au volume du réservoir de stockage, de sorte que ceux-ci ne se substituent pas au système de stockage thermique. De préférence, les volumes de matériaux à changement de phase sont l'ordre de 10% du volume du réservoir thermocline. Un volume de matériau à changement de phase allant de 1% à 10 % du réservoir thermocline est préférentiellement envisageable.

Le fonctionnement de la centrale solaire des figures 1 et 4 va maintenant être décrit. Il peut notamment être mis en oeuvre selon cinq modes de fonctionnement possibles suivants, notés de A à E :
- Mode A : phase de stockage uniquement du champs solaire vers le réservoir de stockage ;
- Mode B : phase de déstockage uniquement depuis le réservoir de stockage vers la turbine ;
- Mode C : Phase unique d'alimentation directe du champ solaire vers la turbine ;
- Mode D : Phase d'alimentation de la turbine depuis le champ solaire et depuis le réservoir de stockage (phase de déstockage couplée à une alimentation directe) ;
- Mode E : Phase d'alimentation de la turbine depuis le champ solaire et phase de stockage (phase de stockage couplée à une alimentation directe de la turbine depuis le champ solaire).

En phase de déstockage (Mode B), les vannes 18, 28 et 26 sont fermées et les vannes 20, 16 et 24 sont ouvertes, le thermocline RTH est connecté uniquement à la turbine TU. L'écoulement du fluide se fait suivant les flèches III. La centrale est dans une phase de production d'électricité uniquement à partir du fluide chaud déstocké par le thermocline RTH, par exemple le soir ou la nuit.

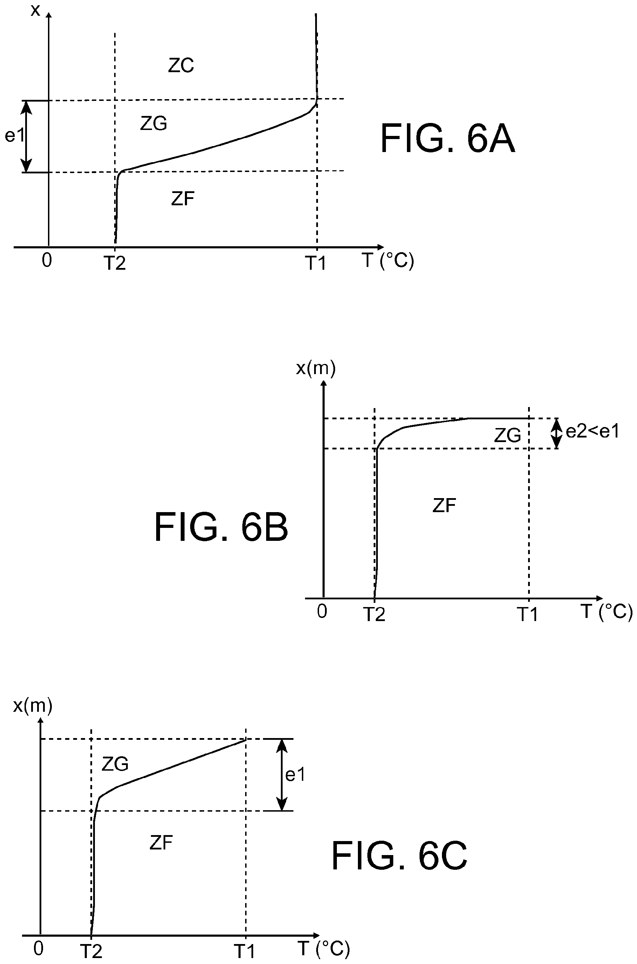

Sur la figure 6A, on peut voir représentée schématiquement le profil de température en °C typique le long de l'axe longitudinal X d'un thermocline (position x en mètre). Le fluide dans le thermocline comporte trois zones du thermocline superposées le long de l'axe longitudinal X du réservoir. En partie supérieure, il s'agit de la zone chaude ZC, en partie inférieure, il s'agit de la zone froide ZF et entre les zones chaude et froide il s'agit de la zone de gradient ZG. Comme expliqué ci-dessus, la zone de gradient n'est pas efficace pour le processus de stockage d'un point de vue énergétique.

Sur la figure 6B, il s'agit du profil de température en fin de décharge du thermocline RTH de la centrale solaire de la figure 1 mettant en oeuvre l'échangeur thermique MCPT1.

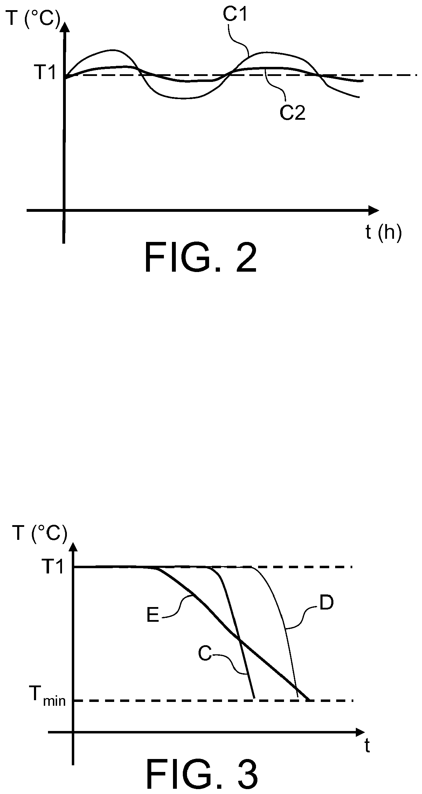

La figure 3 représente schématiquement l'effet du matériau à changement de phase du premier échangeur MCP1 sur la température de sortie du fluide en déstockage. Dans le cas de la figure ci-dessous T1 correspond à la température haute de stockage et à la température nominale de fonctionnement de la turbine TU et Tmin correspond à la température minimale de fonctionnement de cette turbine. En l'absence du premier échangeur, la température de sortie du thermocline est tout d'abord constante puis diminue lorsque la zone gradient de température ZG du thermocline atteint le haut du réservoir (courbe E et figure 6B). L'utilisation du premier échangeur à matériau à changement de phase permet de maintenir la température de sortie plus longtemps à T1 (la courbe C correspond à une quantité de matériau à changement de phase inférieure à celle de la courbe D).

Ainsi la température d'entrée du système de conversion qui correspond à la température de déstockage est maintenue constante plus longtemps grâce au premier échangeur de matériau à changement de phase. De plus, l'implantation de l'échangeur MCPT1 permet de « laisser sortir» du réservoir une partie du gradient de température ZG tout en assurant une température nominale de fonctionnement pour la turbine TU (figure 3). Le volume de la zone de gradient ZG est donc réduit, dans le cas présente, c'est son épaisseur e2 qui est réduite, en fin de décharge (figure 6B). Ainsi le taux d'utilisation du réservoir est augmenté, ce qui permet de diminuer sa taille à iso-quantité d'énergie stockée/déstockée, ou d'augmenter la quantité d'énergie stockée/déstockée à iso-taille de réservoir. A titre de comparaison, la figure 6C représente le profil de température en fin de décharge d'un thermocline sans échangeur thermique MCPT1. On constate que l'épaisseur e1 de la zone de gradient est plus importante que sur la figure 6B, en effet dans une centrale solaire de l'état de la technique, il n'est pas envisageable, dans un fonctionnement optimisé de la turbine, de laisser sortir une partie de cette zone de gradient, puisque sa température est inférieure à T1.

Le fluide chaud sort du thermocline RTH par l'orifice supérieur 10, circule dans la connexion 14, traverse le premier échangeur MCPT1 et alimente directement la turbine TU. Comme expliqué ci-dessus, le premier échangeur lisse la température du fluide en entrée de la turbine TU, son fonctionnement est amélioré et le fonctionnement de l'ensemble de la centrale est amélioré.

En outre, le thermocline RTH est alimenté par le fluide froid sortant de la turbine, qui traverse préalablement le deuxième échangeur MCPT2 et circule dans la connexion 22, la température d'alimentation du thermocline RTH est alors stabilisée.

L'implantation de l'échangeur MCPT2 permet, en phase de décharge, de lisser les variations de la température d'entrée T2, ce qui permet un fonctionnement optimisé du thermocline RTH.

En mode A, lorsque les vannes 20, 16 et 24 sont fermées et les vannes 18, 28 et 26 sont ouvertes, tout le fluide chaud est envoyé dans le thermocline RTH. L'écoulement du fluide se fait suivant les flèches **I.** Le fluide chaud sortant du champ solaire CS est injecté dans le thermocline RTH après avoir traversé le premier échangeur MCPT1.

Sur la figure 2, on peut voir représenté de manière schématique la variation, en fonction du temps, de la température du fluide chaud au niveau de l'orifice supérieur d'un thermocline et/ou de l'entrée de la turbine en l'absence d'un échangeur MCPT1 (courbe C1) et en présence d'un échangeur MCPT1, la température est alors mesurée en sortie du échangeur MCPT1 (courbe C2).

En effet, le fluide chaud sortant du champ solaire peut connaître des variations, par exemple dues à des problèmes de régulation, à des variations d'ensoleillement, à des variations de fonctionnement du stockage ou de la turbine etc.

On constate que la température du fluide chaud en sortie de l'échangeur MCPT1 présente des variations de plus faibles amplitudes autour de la température T1. Le matériau à changement de phase a un effet lissant sur la variation de température. Ainsi le thermocline est alimenté avec un fluide chaud dont la température varie peu. Pour le bon fonctionnement du thermocline, il est préférable d'avoir une alimentation en fluide chaud ayant la température la plus constante possible, la mise en oeuvre de l'échangeur MCPT1 permet d'atteindre cet objectif.

Le fluide froid sort du thermocline RTH par l'orifice inférieur 12 et est envoyé dans le champ solaire CS par l'intermédiaire du deuxième échangeur MCPT2.

En stabilisant la température du fluide chaud en entrée du thermocline RTH, le fonctionnement du thermocline RTH est optimisé. En outre, dans le mode de réalisation avantageux mettant en oeuvre un deuxième échangeur MCPT2, celui-ci a un effet similaire de lissage sur la température du fluide froid sortant du thermocline et entrant dans le champ solaire, ce qui permet un fonctionnement optimisé du champ solaire.

Grâce à la mise en oeuvre de l'échangeur MCPT1, les variations de la température d'entrée T1 sont lissées ce qui permet un fonctionnement optimisé du thermocline RTH. En outre, un effet de lissage des inhomogénéités transversales de température pouvant exister au sein du thermocline est obtenu.

Dans cette configuration de fonctionnement, la mise en place de l'échangeur MCPT2 permet d'obtenir un lissage des variations de la température T2 de sortie du thermocline RTH avant son retour vers le champ solaire CS, ce qui permet d'alimenter le champ solaire avec une température plus constante et donc de limiter les variations de température de sortie du champ solaire. L'implantation de l'échangeur MCPT2 permet également de « laisser sortir» du réservoir de stockage une partie de la zone de gradient ZG tout en maintenant une température de sortie constante. En effet, le fonctionnement est similaire à celui présenté en figure 3, mais avec la température froide T2. Le taux d'utilisation du réservoir thermocline RTH peut alors être augmenté.

Dans le mode d'actionnement de la turbine uniquement par le fluide chaud fourni directement et uniquement par le champ solaire (Mode C), les vannes 18, 16, 28 et 24 sont fermées et les vannes 20 et 26 sont ouvertes, le champ solaire est alors connecté uniquement à la turbine TU. L'écoulement du fluide se fait suivant les flèches II, tout le fluide est envoyé dans la turbine. L'installation est dans une phase de production d'électricité uniquement à partir du fluide chaud envoyé directement par le champ solaire.

Tout le fluide chaud est envoyé dans la turbine TU après avoir traversé le premier échangeur MCPT1. L'implantation de l'échangeur MCPT1 en sortie de champ solaire permet de lisser les variations de température du fluide chaud. Le fonctionnement de la turbine TU est optimisé puisque la température du fluide chaud varie peu et est proche ou égale de la température nominale T1 de fonctionnement de la turbine TU (il est rappelé ici, comme expliqué précédemment, qu'une même température T1 est considérée en entrée de turbine et en sortie de champ solaire par commodité). Le ou les matériaux à changement de phases des premier et deuxième échangeurs MCPT1 et MCPT2 contribuent à maintenir constantes les températures chaude et froide en atténuant leurs fluctuations.

Par ailleurs, en stabilisant la température en entrée de la turbine TU, les variations de la température en sortie de la turbine sont réduites. Ainsi la température du fluide froid entrant dans le champ solaire est également lissée ce qui améliore le fonctionnement du champ solaire et les régulations et le contrôle-commande du champ solaire sont en effet moins sollicités. En lissant la température en entrée du champ solaire, la température en sortie du champ solaire est également lissée. Ainsi une stabilisation de l'ensemble de l'installation peut être obtenue.

Le fluide froid sortant de la turbine est envoyé dans le champ solaire CS. De manière avantageuse, en prévoyant le deuxième échangeur MCPT2, tout le fluide sortant de la turbine TU traverse le deuxième échangeur MCPT2 avant de traverser le champ solaire CS. Le fonctionnement du champs solaire CS est encore amélioré. Le fonctionnement de l'installation est ainsi davantage stabilisé.

En phase de stockage et d'alimentation de la turbine (Mode E) les vannes 16 et 24 sont fermées et les vannes 20, 18, 28 et 26 sont ouvertes, la turbine TU, le champ solaire CS et le thermocline RTH sont tous interconnectés, le champ solaire alimente à la fois la turbine TU et le thermocline RTH. Le fonctionnement est celui à la fois en phase stockage et en phase d'alimentation de la turbine uniquement.

En phase de déstockage et d'alimentation de la turbine (Mode D), les vannes 18 et 28 sont fermées et les vannes 24, 26, 16 et 20 sont ouvertes. La turbine TU, le champ solaire CS et le thermocline RTH sont tous interconnectés, la turbine est alimentée à la fois par le champ solaire CS et le thermocline RTH. Lee fonctionnement est celui à la fois en phase déstockage et en phase d'alimentation de la turbine uniquement.

Les effets décrits ci-dessus sont également obtenus. Le fonctionnement de l'ensemble de l'installation est alors stabilisé.

Les vannes 18, 20, 24 et 26 sont préférentiellement des vannes de réglage pour permettre de réguler les débits envoyés respectivement au champ solaire, au réservoir de stockage et à la turbine.

Comme mentionné ci-dessus, des vannes peuvent être prévues de manière avantageuse en amont et en aval du premier échangeur et/ou du deuxième échangeur, permettant le remplacement de l'un et/ou l'autre de manière aisée. Ce remplacement peut être souhaité pour des raisons de maintenance et/ou pour remplacer le matériau à changement de phase afin d'avoir une température de changement de phase différente.

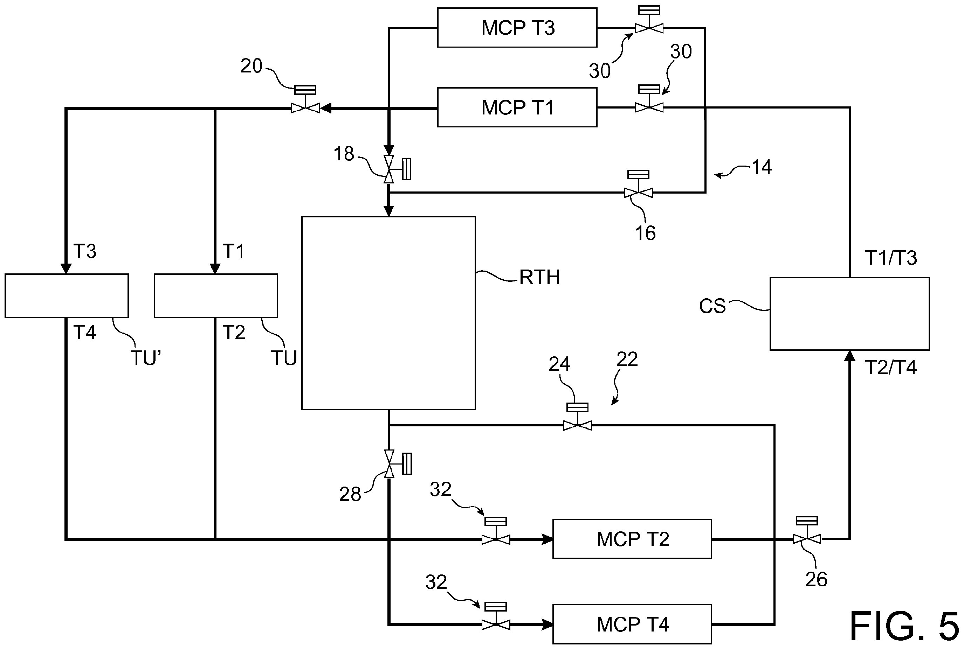

Sur la figure 5, on peut voir un autre exemple de réalisation de l'invention dans laquelle la centrale comporte deux turbines TU, TU' ayant des températures nominales de fonctionnement différentes. Par exemple, la turbine TU a une température nominale de fonctionnement T1 et est destinée à un fonctionnement en période estivale et la turbine TU' a une température nominale de fonctionnement T3 inférieure à T1 et est destinée à un fonctionnement hivernal.

La centrale comporte alors deux premiers échangeurs MCPT1 et MCPT3 en aval du champ solaire dédié à chacune des turbines TU, TU', et dont la température de changement de phase de leur matériau est adaptée à chacune des turbines TU, TU'. En outre, des moyens de commutation 30 permettent de faire traverser le fluide dans l'un ou l'autre des échangeurs MCPT1, MCPT3. Les deux premiers échangeurs sont connectés en parallèle. Les moyens de commutation 30 sont par exemple formés par des vannes situées en amont de chacun des premiers échangeurs de sorte à interdire ou autoriser l'écoulement du fluide à travers l'un ou l'autre des premiers échangeurs MCPT1, MCPT3. Il est à noter que l'écoulement n'est autorisé que dans l'un ou l'autre des échangeurs.

Le fonctionnement de l'installation est similaire à celui de l'installation de la figure 1. Ainsi, en fonction de la période de l'année et de la turbine mise en fonctionnement, le fluide circule dans l'un ou l'autre des premiers échangeurs. Ainsi le fonctionnement de l'une ou l'autre des turbines est optimisé, ainsi que celui du thermocline RTH car la température du fluide chaud reste contrôlée en tout moment de l'année.

Sur la figure 5, deux deuxièmes échangeurs MCPT2, MCPT4 sont également prévus en amont de l'entrée du champ solaire de manière avantageuse et présentent des température de changement de phase adaptées à chacune des température de sortie des turbines TU et TU'.

Des moyens de commutation 32 sont prévus, par exemple formés par des vannes, ceux-ci sont situés en amont de chacun des deuxièmes échangeurs de sorte à interdire ou autoriser l'écoulement du fluide à travers l'un ou l'autre des deuxièmes échangeur. Il est à noter que l'écoulement n'est autorisé que dans l'un ou l'autre des échangeurs.

Dans cet exemple avantageux, lorsque les moyens de commutation 30 autorisent l'écoulement du fluide chaud à travers le premier échangeur MCPT1, les moyens de commutation 32 autorisent l'écoulement du fluide froid à travers le deuxième échangeur MCPT2 et lorsque les moyens de commutation 30 autorisent l'écoulement du fluide chaud à travers le premier échangeur MCPT3, les moyens de commutation 32 autorisent l'écoulement du fluide froid à travers le deuxième échangeur MCPT4.

Les vannes 30 et 32 sont également de préférence des électrovannes.

A titre d'exemple, T1 est égale à 300°C et T2 est égale à 150°C, et T3 est égale à 250°C et T4 est égale à 120°C.

Il sera compris qu'une centrale solaire comportant uniquement deux premiers échangeurs et aucun deuxième échangeur est comprise dans le cadre de l'invention.

Par ailleurs, comme cela a été décrit ci-dessus, on peut prévoir de faciliter le remplacement de l'un et/ou l'autre des premier et deuxième échangeurs. On peut donc prévoir dans le cas d'une centrale solaire à deux turbines voire plus, ayant des températures nominales de fonctionnement différentes, d'adapter le premier échangeur et le deuxième échangeur le cas échant en les remplaçant en fonction de la turbine en fonctionnement.

L'invention permet donc d'accroître la versatilité de la centrale solaire à concentration en mettant en oeuvre en parallèle plusieurs échangeurs à matériau à changement de phase à différentes températures de changement de phase. Ceci permet d'adapter le fonctionnement de la centrale à différents niveaux de température. En outre, grâce à l'invention, un seul système de stockage est requis, par exemple un thermocline, puisque celui-ci peut voir ses températures chaude et froide modifiées.

Grâce à l'invention, on obtient une amélioration du fonctionnement individuel de chacun éléments composant la centrale solaire, i.e. le ou les champs solaires, le système de stockage thermique et le système de conversion de chaleur, et une amélioration du fonctionnement global de la centrale solaire. La présente invention est particulièrement adaptée à l'utilisation d'un système de stockage thermique de type thermocline.

Dans les exemples présentés, le champ solaire et le réservoir de stockage sont connectés à un ou plusieurs organes de conversion électrique. De façon plus générale, les organes TU et TU' peuvent être tout organe de conversion/utilisation de la chaleur, comme par exemple une installation mettant en oeuvre un procédé industriel utilisant de la chaleur, une machine à absorption pour produire du froid à partir de la chaleur solaire etc.

## Revendications

1. Centrale solaire comportant au moins un champ solaire (CS) apte à délivrer un fluide chaud, au moins un système de conversion de chaleur (TU, TU'), un système de stockage thermique (RTH), ledit système de conversion de chaleur (TU, TU') et ledit système de stockage thermique (RTH) étant connectés en sortie du champ solaire (CS) de sorte à être alimentés en fluide chaud et ledit champ solaire (CS) étant connecté en sortie du système de conversion de chaleur (TU, TU') et du système de stockage thermique (RTH) de sorte que le champ solaire (CS) soit alimenté en fluide froid par le système de conversion de chaleur (TU, TU') et/ou le système de stockage thermique (RTH), dans laquelle ladite centrale solaire comporte au moins un premier échangeur thermique (MCPT1, MCPT3) disposé en aval de la sortie du champ solaire (CS), en amont du système de conversion de chaleur (TU, TU') et entre la sortie du champ solaire (CS) et le système de stockage thermique (RTH) de sorte que tout le fluide chaud sortant du champ solaire (CS) circule dans ledit au moins un premier échangeur thermique (MCPT1, MCPT3) avant d'alimenter le système de conversion de chaleur (TU, TU') et/ou le système de stockage thermique (RTH), ledit premier échangeur thermique (MCPT1, MCPT3) comportant un matériau à changement de phase dont la température de changement de phase est telle que l'écart entre la température nominale de fonctionnement de sortie du champ solaire (T1, T3) et la température de changement de phase du matériau à changement de phase du premier échangeur thermique est compris entre 1°C et 15°C.

2. Centrale selon la revendication 1, dans laquelle ledit au moins un premier échangeur thermique (MCPT1, MCPT3) est disposé dans le circuit de la centrale solaire de sorte à être traversé par le fluide chaud destiné à alimenter à la fois le système de conversion de chaleur (TU, TU') et le système de stockage thermique (RTH).

3. Centrale selon l'une des revendications 1 ou 2, comportant n systèmes de conversion de chaleur (TU, TU') présentant des température nominale de fonctionnement différentes (T1, T3) et n premiers échangeurs thermiques (MCPT1, MCPT3) en parallèle et des moyens (30) pour autoriser ou interdire la circulation du fluide chaud dans l'un des n premiers échangeur thermiques, les matériaux de phases des n premiers échangeurs thermiques (MCPT1, MCPT3) présentant des températures de changement de phase différentes, n étant un entier supérieur ou égal à deux.

4. Centrale selon l'une des revendications 1, 2 ou 3 comportant au moins un deuxième échangeur thermique (MCPT2, MCPT4) disposé en amont de l'entrée du champ solaire (CS), en aval du système de conversion de chaleur (TU, TU') et entre le système de stockage thermique (RTH) et l'entrée du champ solaire (CS) et de sorte que tout le fluide froid destiné à circuler dans le champ solaire (CS) ait préalablement traversé ledit deuxième échangeur thermique (MCPT2, MCPT4), ledit deuxième échangeur thermique (MCPT2, MCPT4) comportant un matériau à changement de phase dont la température de changement de phase est à une température légèrement supérieure à celle de la température nominale de fonctionnement (T2, T4) en entrée du champ solaire (CS), ledit au moins un deuxième échangeur thermique (MCPT2, MCPT4) étant avantageusement disposé dans le circuit de la centrale solaire de sorte à être traversé par le fluide froid sortant à la fois du système de conversion de chaleur (TU, TU') et du système de stockage thermique (RTH).

5. Centrale selon les revendications 3 et 4, comportant n deuxièmes échangeurs thermiques (MCPT2, MCPT4) en parallèle et des moyens (32) pour autoriser ou interdire la circulation du fluide chaud dans l'un des n deuxièmes échangeurs thermiques (MCPT2, MCPT4), les matériaux de phases des n deuxièmes échangeurs thermiques présentant des températures de changement de phase différentes.

6. Centrale selon l'une des revendications 1 à 5, comportant des moyens pour isoler fluidiquement ledit premier échangeur thermique (MCPT1, MCPT3) et/ou ledit deuxième échangeur thermique (MCPT2, MCPT4).

7. Centrale selon l'une des revendications 1 à 6 en combinaison avec la revendication 4, dans laquelle l'écart entre la température nominale de fonctionnement (T2, T4) en entrée du champ solaire (CS) et la température de changement de phase du matériau à changement de phase du deuxième échangeur thermique (MCPT2, MCPT4) est compris entre 1°C et 15°C.

8. Centrale selon l'une des revendications 1 à 7, dans laquelle le rapport entre le volume de matériau à changement de phase du premier échangeur thermique (MCPT1, MCPT3) et/ou entre le volume de matériau à changement de phase du deuxième échangeur thermique (MCPT2, MCPT4) et le volume du système de stockage thermique (RTH) thermique est/sont compris entre 1 % et 10% du volume du réservoir de stockage

9. Centrale selon l'une des revendications 1 à 8, dans laquelle le système de stockage de la chaleur est un réservoir thermocline, ledit réservoir thermocline comportant un orifice supérieur (10) et un orifice inférieur (12), et comportant une connexion fluidique (14) entre l'orifice supérieur (10) et l'amont dudit premier échangeur thermique (MCPT1, MCPT3), ledit réservoir thermocline étant avantageusement un réservoir thermocline dual.

10. Centrale selon la revendication 9 en combinaison avec la revendication 4 ou 5, comportant un connexion fluidique (22) entre l'orifice inférieur (12) et l'aval du deuxième échangeur thermique (MCPT2, MCPT4).

11. Centrale solaire selon l'une des revendications 1 à 10, dans laquelle le premier et/ou le deuxième échangeur thermique comportent un matériau à changement de phase encapsulé sous forme de billes.

12. Centrale solaire selon l'une des revendications 1 à 11, dans laquelle le premier et/ou le deuxième échangeur thermique comportent une calandre remplie du matériau à changement de phase et des tubes dans lesquels le fluide circule.

13. Centrale solaire selon l'une des revendications 1 à 12, dans laquelle le système de conversion de chaleur (TU, TU') est un système de production d'électricité, par exemple une turbine, ou une machine à absorption, une installation mettant en oeuvre procédé industriel utilisant de la chaleur...

14. Centrale solaire selon l'une des revendications 1 à 13, dans laquelle la centrale solaire est une centrale solaire à concentration.

## Patentansprüche

1. Solarkraftwerk mit zumindest einem Solarfeld (CS), das dazu geeignet ist, ein heißes Medium bereitzustellen, zumindest ein Wärmeumwandlungssystem (TU, TU'), ein Wärmespeichersystem (RTH), wobei das Wärmeumwandlungssystem (TU, TU') und das Wärmespeichersystem (RTH) am Auslass des Solarfeldes (CS) so angeschlossen sind, dass sie mit dem heißen Medium gespeist werden, und wobei das Solarfeld (CS) am Auslass des Wärmeumwandlungssystems (TU, TU') und des Wärmespeichersystems (RTH) so angeschlossen ist, dass das Solarfeld (CS) über das Wärmeumwandlungssystem (TU, TU') und/oder das Wärmespeichersystem (RTH) mit kaltem Medium gespeist wird, wobei das Solarkraftwerk zumindest einen ersten Wärmetauscher (MCPT1, MCPT3) enthält, der dem Auslass des Solarfelds (CS) nachgelagert ist und dem Wärmeumwandlungssystem (TU, TU') vorgelagert ist und zwischen dem Auslass des Solarfeldes (CS) und dem Wärmespeichersystem (RTH) angeordnet ist, so dass das gesamte aus dem Solarfeld (CS) austretende heiße Medium in den zumindest einen ersten Wärmetauscher (MCPT1, MCPT3) einströmt, bevor das Wärmeumwandlungssystem (TU, TU') und/oder das Wärmespeichersystem (RTH) damit gespeist wird, wobei der erste Wärmetauscher (MCPT1, MCPT3) ein Phasenwechselmaterial enthält, dessen Phasenwechseltemperatur derart ist, dass die Abweichung zwischen der nominalen Betriebstemperatur am Auslass des Solarfeldes (T, T3) und der Phasenwechseltemperatur des Phasenwechselmaterials des ersten Wärmetauschers zwischen 1 °C und 15 °C beträgt.

2. Solarkraftwerk nach Anspruch 1, wobei der zumindest eine erste Wärmetauscher (MCPT1, MCPT3) in dem Kreislauf des Solarkraftwerks so angeordnet ist, dass er von dem heißen Medium durchströmt wird, das dazu bestimmt ist, zugleich das Wärmeumwandlungssystem (TU, TU') und das Wärmespeichersystem (RTH) zu speisen.

3. Solarkraftwerk nach einem der Ansprüche 1 oder 2, enthaltend n Wärmeumwandlungssysteme (TU, TU'), die unterschiedliche, nominale Betriebstemperaturen (T1, T3) aufweisen, sowie n parallel geschaltete, erste Wärmetauscher (MCPT1, MCPT3) und Mittel (30) zum Gestatten bzw. Unterbinden der Zirkulation des heißen Mediums in einem der ersten n Wärmetauschern, wobei die Phasenmaterialien der ersten n Wärmetauscher (MCPT1, MCPT3) unterschiedliche Phasenwechseltemperaturen aufweisen, wobei n eine ganze Zahl größer oder gleich zwei ist.

4. Solarkraftwerk nach einem der Ansprüche 1, 2 oder 3, enthaltend zumindest einen zweiten Wärmetauscher (MCPT2, MCPT4), der dem Einlass des Solarfeldes (CS) vorgelagert ist, dem Wärmeumwandlungssystem (TU, TU') nachgelagert ist und zwischen dem Wärmespeichersystem (RTH) und dem Einlass des Solarfeldes (CS) angeordnet ist, so dass das gesamte kalte Medium, das dazu bestimmt ist, in dem Solarfeld (CS) zu zirkulieren, zuvor den zweiten Wärmetauscher (MCPT2, MCPT4) durchströmt hat, wobei der zweite Wärmetauscher (MCPT2, MCPT4) ein Phasenwechselmaterial enthält, dessen Phasenwechseltemperatur bei einer Temperatur liegt, die geringfügig höher als die nominale Betriebstemperatur (T2, T4) am Einlass des Solarfeldes (CS) ist, wobei der zumindest ein zweiter Wärmetauscher (MCPT2, MCPT4) vorteilhaft in dem Kreislauf des Solarkraftwerks so angeordnet ist, dass er von dem katten Medium durchströmt wird, das zugleich aus dem Wärmeumwandungssystem (TU, TU') und dem Wärmespeichersystem (RTH) austritt.

5. Solarkraftwerk nach den Ansprüchen 3 und 4, enthaltend n parallel geschaltete, zweite Wärmetauscher (MCPT2, MCPT4) und Mittel (32) zum Gestatten bzw. Unterbinden der Zirkulation des heißen Mediums in einem der zweiten n Wärmetauschern (MCPT2, MCPT4), wobei die Phasenmaterialien der zweiten n Wärmetauscher unterschiedliche Phasenwechseltemperaturen aufweisen.

6. Solarkraftwerk nach einem der Ansprüche 1 bis 5, enthaltend Mittel zum strömungstechnischen Abtrennen des ersten Wärmetauschers (MCPT1, MCPT3) und/oder des zweiten Wärmetauschers (MCPT2, MCPT4).

7. Solarkraftwerk nach einem der Ansprüche 1 bis 6 in Kombination mit Anspruch 4, wobei die Abweichung zwischen der nominalen Betriebstemperatur (T2, T4) am Einlass des Solarfeldes (CS) und der Phasenwechseltemperatur des Phasenwechselmaterials des zweiten Wärmetauschers (MCPT2, MCPT4) zwischen 1 °C und 15 °C beträgt.

8. Solarkraftwerk nach einem der Ansprüche 1 bis 7, wobei das Verhältnis zwischen dem Volumen des Phasenwechselmaterials des ersten Wärmetauschers (MCPT1, MCPT3) und/oder zwischen dem Volumen des Phasenwechselmaterials des zweiten Wärmetauschers (MCPT2, MCPT4) und dem Volumen des Wärmespeichersystems (RTH) zwischen 1 % und 10 % des Volumens des Speicherbehälters beträgt/betragen.

9. Solarkraftwerk nach einem der Ansprüche 1 bis 8, wobei das Wärmespeichersystem ein Thermokline-Behälter ist, wobei der Thermokline-Behälter eine obere Öffnung (10) und eine untere Öffnung (12) enthält, und eine Strömungsverbindung (14) zwischen der oberen Öffnung (10) und dem vorgelagerten Bereich des ersten Wärmetauschers (MCPT1, MCPT3) enthält, wobei der Thermokline-Behälter vorteilhaft ein dualer Thermokline-Behälter ist.

10. Solarkraftwerk nach Anspruch 9 in Kombination mit Anspruch 4 oder 5, enthaltend eine Strömungsverbindung (22) zwischen der unteren Öffnung (12) und dem nachgelagerten Bereich des zweiten Wärmetauschers (MCPT2, MCPT4).

11. Solarkraftwerk nach einem der Ansprüche 1 bis 10, wobei der erste und/oder der zweite Wärmetauscher ein in Form von Kugeln eingekapseltes Phasenwechselmaterial enthalten.

12. Solarkraftwerk nach einem der Ansprüche 1 bis 11, wobei der erste und/oder der zweite Wärmetauscher einen mit dem Phasenwechselmaterial gefüllten Kalander und Rohre enthalten, in welchen das Medium zirkuliert.

13. Solarkraftwerk nach einem der Ansprüche 1 bis 12, wobei das Wärmeumwandlungssystem (TU, TU') ein Elektrizitätserzeugungssystem ist, beispielweise eine Turbine oder eine Absorptionsmaschine, eine Anlage, die ein industrielles Verfahren unter Verwendung von Wärme durchführt, usw.

14. Solarkraftwerk nach einem der Ansprüche 1 bis 13, wobei das Solarkraftwerk ein CSP-Solarkraftwerk (Concentrated Solar Power) ist.

## Claims

1. Solar power plant comprising at least one solar field (SF) able to deliver a hot fluid, at least one heat conversion system (TU, TU'), a heat storage system (TTH), said heat conversion system (TU, TU') and said heat storage system (TTH) being connected at the exit of the solar field (SF) in such a way as to be supplied with hot fluid and said solar field (SF) being connected at the exit of the heat conversion system (TU, TU') and of the heat storage system (TTH) in such a way that the solar field (SF) is supplied with cold fluid by the heat conversion system (TU, TU') and/or the heat storage system (TTH), wherein said solar power station comprises at least one first heat exchanger (TPCM1, TPCM3) positioned downstream of the exit from the solar field (SF), upstream of the heat conversion system (TU, TU') and between the exit of the solar field (SF) and the heat storage system (TTH) in such a way that all the hot fluid leaving the solar field (SF) circulates in said at least one first heat exchanger (TPCM1, TPCM3) before supplying the heat conversion system (TU, TU') and/or the heat storage system (TTH), said first heat exchanger (TPCM1, TPCM3) comprising a phase-change material of which the phase-change temperature is such that the difference between the nominal operating temperature at the exit of the solar field and the phase-change temperature of the phase-change material of the first heat exchanger is preferably between 1°C and 15°C.

2. Power plant according to claim 1, wherein said at least one first heat exchanger (TPCM1, TPCM3) is positioned in the circuit of the solar power station in such a way as to be passed through by the hot fluid intended to supply both the heat conversion system (TU, TU') and the heat storage system (TTH).

3. Power plant according to one of claims 1 or 2, comprising n heat conversion systems (TU, TU') having different nominal operating temperatures (T1, T3) and n first heat exchangers (TPCM1, TPCM3) in parallel and means (30) for authorising or prohibiting the circulation of the hot fluid in one of the n first heat exchangers, with the phase materials of the n first heat exchangers (TPCM1, TPCM3) having different phase-change temperatures, with n being an integer greater than or equal to two.

4. Power plant according to one of claims 1, 2 or 3 comprising at least one second heat exchanger (TPCM2, TPCM4) positioned upstream of the entry of the solar field (SF), downstream of the heat conversion system (TU, TU') and between the heat storage system (TTH) and the entry of the solar field (SF) and in such a way that all of the cold fluid intended to circulate in the solar field (SF) has passed beforehand through said second heat exchanger (TPCM2, TPCM4), said second heat exchanger (TPCM2, TPCM4) comprising a phase-change material of which the phase-change temperature is at a temperature slightly above that of the nominal operating temperature (T2, T4) at the entry of the solar field (SF), said at least one second heat exchanger (TPCM2, TPCM4) being advantageously positioned in the circuit of the solar power station in such a way as to be passed through by the cold fluid exiting both from the heat conversion system (TU, TU') and from the heat storage system (TTH).

5. Power plant according to one of claims 4 or 5 in combination with claim 3, comprising n second heat exchangers (TPCM2, TPCM4) in parallel and means (32) for authorising or prohibiting the circulation of the hot fluid in one of the n second heat exchangers (TPCM2, TPCM4), with the phase materials of the n second heat exchangers having different phase-change temperatures.

6. Power plant according to one of claims 1 to 4, comprising means for fluidically isolating said first heat exchanger (TPCM1, TPCM3) and/or said second heat exchanger (TPCM2, TPCM4).

7. Power plant according to one of claims 1 to 6 in combination with claim 4, wherein the difference between the nominal operating temperature (T2, T4) at the entry of the solar field (SF) and the phase-change temperature of the phase-change material of the second heat exchanger (TPCM2, TPCM4) is between 1°C and 15°C.

8. Power plant according to one of claims 1 to 7, wherein the ratio between the volume of the phase-change material of the first heat exchanger (TPCM1, TPCM3) and/or between the volume of the phase-change material of the second heat exchanger (TPCM2, TPCM4) and the volume of the heat storage system (TTH) is/are between 1% and 10% of the volume of the storage tank

9. Power plant according to one of claims 1 to 8, wherein the heat storage system is a thermocline tank, said thermocline tank comprising an upper orifice (10) and a lower orifice (12), and comprising a fluidic connection (14) between the upper orifice (10) and the upstream of said first heat exchanger (TPCM1, TPCM3, said thermocline tank being advantageously a mixed-media thermocline tank.

10. Power plant according to claim 9 in combination with claim 4 or 5, comprising a fluidic connection (22) between the lower orifice (12) and the downstream of the second heat exchanger (TPCM2, TPCM4).

11. Solar power plant according to one of claims 1 to 10, wherein the first and/or the second heat exchanger comprise a phase-change material encapsulated in the form of balls.

12. Solar power plant according to one of claims 1 to 11, wherein the first and/or the second heat exchanger comprise a calandria filled with the phase-change material and tubes wherein the fluid circulates.

13. Solar power plant according to one of claims 1 to 12, wherein the heat conversion system (TU, TU') is a system for the production of electricity, for example a turbine, or an absorption machine, an installation implementing an industrial method using heat ...

14. Solar power plant according to one of claims 1 to 13, wherein the solar power station is a concentrating solar power station.
